**Europäisches Patentamt**

**European Patent Office**

**Office européen des brevets**

(11) Veröffentlichungsnummer: **0 395 771**
**A1**

## (12) EUROPÄISCHE PATENTANMELDUNG

(21) Anmeldenummer: **89107316.5**

(22) Anmeldetag: **22.04.89**

(51) Int. Cl.5: **H04M 11/04**

(43) Veröffentlichungstag der Anmeldung:
**07.11.90 Patentblatt 90/45**

(84) Benannte Vertragsstaaten:
**AT CH DE FR GB LI NL**

(71) Anmelder: **tetronik Kommunikationstechnik GmbH**
**Silberbachstrasse 10-12**
**D-6204 Taunusstein-Wehen(DE)**

(72) Erfinder: **Neuroth, Armin**
**Birkenweg 1**
**D-6209 Aarbergen 6(DE)**

(74) Vertreter: **Blumbach Weser Bergen Kramer**
**Zwirner Hoffmann Patentanwälte**
**Sonnenberger Strasse 100**
**D-6200 Wiesbaden 1(DE)**

(54) **Notrufsprechstelle.**

(57) Es wird eine Notruf-, insbesondere Aufzugs-sprechstelle (1) beschrieben, von der aus eine vor-programmierte Zielstelle über eine Vermittlungsanla-ge angerufen werden kann. Die Sprechstelle (1) weist keinen frei zugänglichen Hörer mit zugeordne-tem Gabelumschalter auf. Zur Trennung einer Ver-bindung wird vielmehr der beim Auflegen der Ziel-stelle übertragene Rufton erkannt. Statt dessen kann auch die Verbindung nach Ablauf einer bestimmten Zeitdauer oder bei Ausbleiben von Sprechsignalen aufgelöst werden. Zur Durchschaltung einer ankom-menden Verbindung kann die Sprechstelle mit einer Schaltung (9) zur Anrufstromerkennung ausgestattet sein.

EP 0 395 771 A1

Die Erfindung betrifft eine Notruf-, insbesondere Aufzugssprechstelle, von der aus eine Zielstelle anrufbar ist, indem die Sprechstelle an einer Telefonvermittlungs-, insbesondere Nebenstellenanlage, angeschaltet ist.

Bei der Verwendung einer Telefonnebenstellenanlage mußten die bisher zu diesem Zweck verwendeten Telefonapparate frei zugänglich installiert werden und waren jeder Art von Beschädigung bzw. Zerstörung ausgesetzt. Waren die Handhörer abgerissen oder die Tastaturen defekt, stand somit im Notfall die Alarmierungseinrichtung nicht zur Verfügung.

Der Erfindung liegt daher die Aufgabe zugrunde, eine Aufzugs- bzw. Notrufsprechstelle unter Verwendung einer üblichen Telefonvermittlungs-, insbesondere Nebenstellenanlage verfügbar zu machen, die eine größtmögliche Sicherheit bietet und insbesondere nicht wie bei einer Nebenstelle auf Handhörer angewiesen ist.

Die Erfindung besteht darin, daß eine Notruf-, insbesondere Aufzugssprechstelle der eingangs genannten Art eine Notruftaste aufweist und die Vermittlungsanlage bei Betätigung der Notruftaste eine Verbindung mit der vorprogrammierten Zielstelle herstellt und daß eine Trenneinrichtung automatisch die Verbindung beendet und eine neue Anrufbereitschaft herstellt.

Mit Vorteil schlägt die Erfindung vor, daß eine optische oder akustische Anzeige für eine zustande gekommenen Verbindung vorgesehen ist, beispielsweise eine Leuchtdiode (LED) oder ein Summer. Auf diese Weise erfährt der jeweilige Teilnehmer, daß die von ihm gewünschte Verbindung zustande gekommen ist. Auch eine ankommend hergestellte Verbindung wird angezeigt, so daß ein unerkanntes Abhören des Teilnehmers nicht möglich ist.

In vorteilhafter Weise kann die Trennung nach Ablauf einer bestimmten Zeitdauer automatisch erfolgen.

Eine andere vorteilhafte Möglichkeit besteht darin, daß die Trennung nach dem Ausbleiben von Sprechsignalen automatisch erfolgt.

In ihrer Weiterbildung schlägt die Erfindung vor, daß die Trennung mit Hilfe eines sogenannten Besetzt-Ton-Detektors erfolgt.

In ihrer Weiterbildung schlägt die Erfindung vor, daß die Notrufsprechstelle mit Lautsprecher, Mikrophon und Notruftaste mit LED in einem Unterputzgehäuse mit Frontplatte eingebaut ist.

Auf vorteilhafte Weise kann außerdem eine Schaltung vorgesehen sein, die abhängig von ankommendem Rufstrom die Sprechstelle einschaltet. Dann kann auch extern eine Verbindung zu der Sprechstelle aufgebaut werden.

Auf diese Art und Weise ist eine gegen Einwirkung von außen weitgehend unempfindliche Aufzugs- bzw. Notrufstelle verfügbar gemacht, die außenliegende, einer Zerstörung zugängliche mechanische Teile vermeidet und bei der eine hergestellte Verbindung automatisch beendet und eine neue Anrufbereitschaft hergestellt wird.

Die Erfindung soll nachstehend anhand eines Blockschaltbildes näher erläutert werden.

Das Blockschaltbild zeigt schematisch eine Aufzugssprechstelle 1 innerhalb der gestrichelten Umrahmung. Die Sprechstelle ist mittels einer Anschlußleitung 2 mit den Adern La und Lb an die Vermittlungsstelle (nicht gezeigt), beispielsweise eine Nebenstellenanlage, angeschlossen. Die Anschlußleitung 2 kann eine sogenannte "Hot Line"- oder Alarmleitung bekannter Art sein, über die auf vorprogrammierte Weise automatisch eine Verbindung zu einer bestimmten Zielstelle hergestellt wird, beispielsweise zu einer dauernd besetzten Portiersloge in einem Industriebetrieb oder auch einem Hotel. In bekannter Weise ist außerdem dafür gesorgt, daß eine über die Alarmleitung ankommende Verbindung automatisch weitergeschaltet wird, wenn die ursprüngliche Zielstelle besetzt oder nicht erreichbar ist. Die Sprechstelle 1 wird in üblicher Weise über einen Anschluß 3 mit einer Spannung von beispielsweise 24 V versorgt.

Der mit "Telefonplatine" bezeichnete Schaltungsblock 4 enthält die üblichen Bauteile einer Sprechstelle, beispielsweise eine Gabelschaltung, Widerstände, Kondensatoren und so weiter. An die Telefonplatine 4 sind ein Mikrophon 5 und ein Lautsprecher 6 ebenfalls üblicher Bauart angeschlossen. Da die Sprechstelle 1 keinen mittels eines Hörers betätigten Gabelumschalter aufweist, wird dessen Funktion von dem Schaltungsblock 7 übernommen, der einen relaisbetätigten Umschalter besitzt. Wenn der Teilnehmer beispielsweise dann, wenn ein Aufzug steckenbleibt, eine Verbindung zu einer Zielstelle, beispielsweise einer Portiersloge, herstellen will, betätigt er eine Notruftaste 8. Es wird dann das Gabelumschalterrelais im Schaltungsblock 7 betätigt und automatisch über die Anschlußleitung 2 eine Verbindung zur Zielstelle hergestellt. Das Trennen der Verbindung erfolgt dadurch, daß die Zielstelle einhängt, so daß dann die Vermittlungsanlage einen Besetztton zur Sprechstelle 1 über die Anschlußleitung 2 überträgt. Dieser Besetztton wird vom Besetzttondetektor 18 erkannt, der daraufhin das Gabelumschalterrelais abfallen läßt. Die Erkennung des Besetzttons mit einer Frequenz von meist 425 Hz erfolgt durch Ausfiltern dieser Frequenz und Erkennen des impulsförmig ankommenden Besetztzeichens. Beispielsweise können drei oder zur Erzielung einer höheren Sicherheit auch fünf bis zehn Impulse erkannt werden. Eine entsprechende Schaltungsanordnung kann vom Fachmann auf übliche Weise realisiert werden.

Damit auch von außen, also beispielsweise aus der Portiersloge, eine Verbindung zur Sprechstelle 1 hergestellt werden kann, beispielsweise um dem Teilnehmer mitzuteilen, daß ein Monteur unterwegs ist, weist die Sprechstelle 1 eine Anrufstrom-Erkennungsschaltung 9 auf. Eine solche Schaltung läßt sich ebenfalls in bekannter Weise verwirklichen. Wenn ein ankommender Anrufstrom festgestellt wird, veranlaßt die Schaltung 9 wiederum die Betätigung des Gabelumschalterrelais 7. Die Verbindung wird dann durchgeschaltet.

Eine Gesprächserkennungsschaltung 10 sorgt dafür, daß dem Teilnehmer die Herstellung einer abgehenden oder auch ankommenden Verbindung mittels einer Leuchtdiode (LED) 11 angezeigt wird. Diese Leuchtdiode kann beispielsweise in der Notruftaste 8 untergebracht sein. Die Gesprächserkennungsschaltung 10 braucht auf einfache Weise jeweils nur festzustellen, daß ein Schleifenstrom über die Anschlußleitung 2 fließt.

Die gesamte Schaltung der Sprechstelle 1 kann in einem Unterputzgehäuse untergebracht sein, wobei das Mikrophon 5 und der Lautsprecher 6 durch eine Frontplatte akustisch zugängig sind. Außerdem ist die Notruftaste 8 mit der eingebauten Leuchtdiode 11 in der Frontplatte angeordnet.

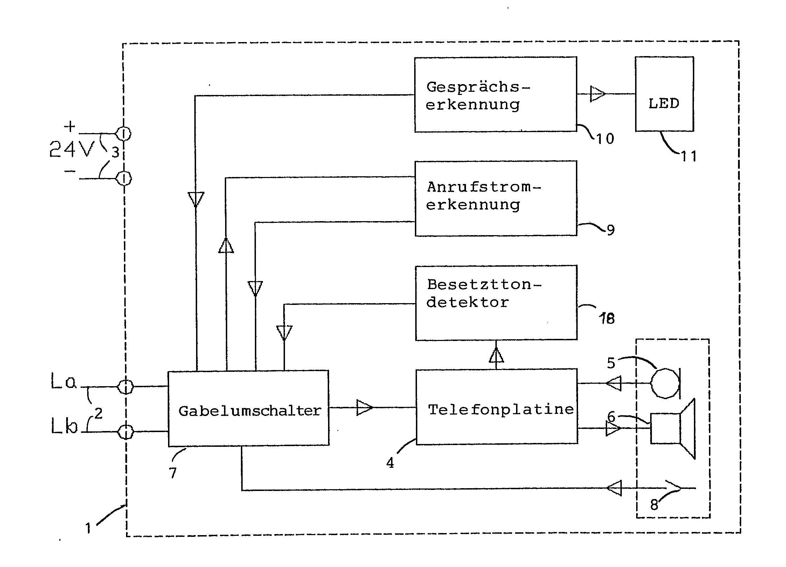

**Ansprüche**

1. Notruf-, insbesondere Aufzugssprechstelle, von der aus eine Zielstelle anrufbar ist, indem die Sprechstelle an einer Telefonvermittlungs-, insbesondere Nebenstellenanlage, angeschaltet ist, dadurch gekennzeichnet, daß die Sprechstelle (1) eine Notruftaste (8) aufweist und die Vermittlungsanlage bei Betätigung der Notruftaste (8) eine Verbindung mit der vorprogrammierten Zielstelle herstellt und daß eine Trenneinrichtung (7, 18) automatisch die Verbindung beendet und eine neue Anrufbereitschaft herstellt.

2. Vorrichtung nach Anspruch 1, dadurch gekennzeichnet, daß eine optische oder akustische Anzeige (11) für eine zustande gekommenen Verbindung vorgesehen ist.

3. Vorrichtung nach Anspruch 1 oder 2, dadurch gekennzeichnet, daß die Trenneinrichtung die Verbindung nach Ablauf einer bestimmten Zeitdauer automatisch beendet.

4. Vorrichtung nach Anspruch 1, 2 oder 3, dadurch gekennzeichnet, daß die Trenneinrichtung die Verbindung nach dem Ausbleiben von Sprechsignalen automatisch beendet.

5. Vorrichtung nach Anspruch 4, dadurch gekennzeichnet, daß die Trennung mit Hilfe eines sogenannten Besetzt-Ton-Detektors (18) erfolgt.

6. Vorrichtung nach einem der Ansprüche 1 bis 5, dadurch gekennzeichnet, daß die Notrufsprechstelle (1) mit Lautsprecher (6), Mikrophon (5) und Notruftaste (8) mit LED (11) in einem Unterputzgehäuse mit Frontplatte eingebaut ist.

7. Vorrichtung nach einem der Ansprüche 1 bis 6, gekennzeichnet durch eine Schaltung (9), die abhängig von ankommendem Rufstrom die Sprechstelle (1) einschaltet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 472 313 (CAPITANT)<br>* Seite 3, Zeilen 1-10; Seite 5, Zeilen 15-35; Seite 6, Zeilen 27-30; Seite 7, Zeilen 3-15 *<br>--- | 1-3,6,7 | H 04 M 11/04 |
| X | GB-A-2 166 321 (TUNSTALL TELECOM)<br>* Seite 3, Zeilen 91-100 *<br>--- | 1,3,5 | |
| X | DE-A-2 913 391 (SIEMENS)<br>* Ansprüche; Seite 6, Zeilen 20-34 *<br>--- | 1,3,6 | |
| A | GB-A-2 137 055 (MARCONI AVIONICS)<br>* Seite 1, Zeilen 18-26 *<br>----- | 4 | |

| RECHERCHIERTE SACHGEBIETE (Int. Cl.5) |
|---|
| H 04 M |

Der vorliegende Recherchenbericht wurde für alle Patentansprüche erstellt

| Recherchenort | Abschlußdatum der Recherche | Prüfer |
|---|---|---|
| DEN HAAG | 10-10-1989 | BISCHOF J.L.A. |